# EUROPÄISCHE PATENTSCHRIFT

(11) **EP 3 885 728 B1**
(45) Veröffentlichungstag und Bekanntmachung des Hinweises auf die Patenterteilung: **17.06.2026**
(21) Anmeldenummer: 21152781.7
(22) Anmeldetag: 21.01.2021
(51) Int. Cl.: G01L 1/12

(54) **SYSTEM ZUR DEHNUNGSERFASSUNG EINES ELASTOMEREN PRODUKTS**
SYSTEM FOR DETECTING STRAIN OF AN ELASTOMERIC PRODUCT
SYSTÈME DE DÉTECTION DE LA DILATATION D'UN PRODUIT ÉLASTOMÈRE

(30) Priorität: 24.03.2020 DE 102020203811
(43) Veröffentlichungstag der Anmeldung: 29.09.2021
(73) Patentinhaber: ContiTech Deutschland GmbH, 30175 Hannover (DE)
(72) Erfinder: SIPILÄ, Pekka, 30419 Hannover (DE); ROSENBOHM, Svenja, 30419 Hannover (DE); FISS, Tim, 30419 Hannover (DE)
(74) Vertreter: Preusser, Andrea

(56) Entgegenhaltungen:
- WO-A2-03/016891
- WO-A2-2019/105621
- DE-A1- 102016 209 322
- US-A1- 2011 232 392

## Beschreibung

Die vorliegende Erfindung betrifft ein System zur Dehnungserfassung eines elastomeren Produkts gemäß des Patentanspruchs 1.

Es sind zahlreiche technische Anwendungen bekannt, bei denen elastomere Produkte genutzt werden. Derartige Produkte können aus einem Elastomermaterial oder auch aus mehreren Elastomermaterialien bestehen bzw. ein Elastomermaterial oder auch mehrere Elastomermaterialien aufweisen. Unter einem Elastomermaterial bzw. unter einem elastomeren Material ist ein Elastomer als formfester, aber elastisch verformbarer Kunststoff zu verstehen, dessen Glasübergangspunkt sich unterhalb der Einsatztemperatur befindet. Insbesondere kann ein Elastomer ein Vulkanisat von Naturkautschuk oder von Silikonkautschuk sein und auch als Gummi bezeichnet werden. Beispielsweise können derartige elastomere Produkte Schläuche, Riemen und insbesondere Antriebsriemen, Bänder und insbesondere Förderbänder bzw. Gurte und insbesondere Fördergurte, Luftfedern, Fahrzeugreifen und dergleichen sein.

Um die Dehnung von Produkten allgemein zu erkennen, welche einer Krafteinwirkung in zumindest einer Richtung ausgesetzt sind, ist es z.B. bekannt, die akustische Entfernung, d.h. die Laufzeit eines Signals, zwischen zwei Messpunkten entlang der Richtung der Krafteinwirkung messtechnisch zu erfassen. Hierzu kann z.B. Ultraschall eingesetzt werden, indem an einer ersten Stelle des Produkts ein Ultraschallsignal erzeugt und an einer zweiten Stelle sensorisch erfasst wird. Üblicherweise werden zur Erzeugung von Ultraschallsignalen Piezokristalle verwendet, welche durch direkten oder indirekten Kontakt mit der Oberfläche des Produkts dort Schallwellen einkoppeln, welche sich zumindest auch durch das Produkt in der Richtung der Krafteinwirkung zum Sensor hin ausbreiten, wo sie ebenfalls mittels eines Piezokristalls erfasst werden können. Ist der Abstand zwischen den beiden Stellen von Ultraschallerzeuger und Ultraschallsensor hinreichend genau bekannt, kann durch wiederholte Messung durch eine Erhöhung der Signallaufzeit eine Dehnung in dieser Richtung messtechnisch erkannt werden.

Nachteilig ist hierbei, dass derartige Verfahren üblicherweise bei rein metallischen Körpern angewendet werden, welche ausreichend starr sind, um die Ausbreitung der Ultraschallwellen zu ermöglichen. Aufgrund seiner vergleichsweise hohen Elastizität, welche zu einer vergleichsweise hohen Absorption von Schallwellen, insbesondere bei hohen Frequenzen, allgemein führt, können derartige Verfahren jedoch nicht auf elastomere Produkte angewendet werden.

Nachteilig ist ferner, dass zur Übertragung der Ultraschallwellen von dem Ultraschallerzeuger in das Produkt hinein sowie der Ultraschallwellen zum Ultraschallsensor aus dem Produkt heraus jeweils ein berührender Kontakt erforderlich ist. Dieser berührende Kontakt kann direkt zwischen der Oberfläche des Produkts und dem Ultraschallerzeuger bzw. dem Ultraschallsensor erfolgen. Alternativ kann auch ein Koppelmittel wie z.B. Wasser, Öl, Gel oder dergleichen zwischen der Oberfläche des Produkts und dem Ultraschallerzeuger bzw. dem Ultraschallsensor vorgesehen werden. In jedem Fall verhindert diese Anforderung den Einsatz dieses Messverfahrens im Betrieb bei sich bewegenden Produkten wie z.B. Antriebsriemen, Förderbänder, Luftfedern und dergleichen.

Zur berührungslosen messtechnischen Erfassung von Dehnungen in Produkten und insbesondere in elastomeren Produkten sind optische Verfahren bekannt, um die Dehnung von Produkten allgemein in zumindest einer Richtung einer Krafteinwirkung messtechnisch zu erfassen. Hierzu können z.B. Referenzmarkierungen z.B. in Form von Streifen an wenigstens zwei Stellen entlang der Richtung der Krafteinwirkung außen auf dem Produkt aufgebracht werden, welche dann z.B. mittels einer Bildverarbeitungseinheit wie z.B. mittels einer Kamera optisch erfasst werden können. Ist der Abstand zwischen den beiden Referenzmarkierungen hinreichend genau bekannt, kann durch wiederholte Messung durch eine Erhöhung des Abstands eine Dehnung in dieser Richtung erfasst werden.

Nachteilig hierbei ist, dass derartige optische Verfahren durch Umwelteinflüsse wie z.B. Schmutz, Öl, Feuchtigkeit, Staub, Rauch und dergleichen ausreichend beeinträchtigt werden können, um zumindest eine der Referenzmarkierungen unzureichend oder sogar gar nicht mehr erkennen zu können. Dies kann die Ermittlung des Abstands verhindern. Auch können die Referenzmarkierungen lediglich dort an dem Produkt angeordnet werden, wo sie auch optisch erfasst werden können. Dies kann die Auswahl von geeigneten Stellen für die Referenzmarkierungen einschränken.

Ferner ist ein gewisser Abstand zwischen den Referenzmarkierungen erforderlich, um überhaupt Abstandsänderungen optisch erkennen zu können. Somit sind optische Verfahren lediglich bei vergleichsweise großen bzw. langen Produkten sinnvoll anwendbar.

Alternativ ist es bekannt, entsprechende Sensoren wie z.B. Dehnungsmesstreifen auf wenigstens eine Oberfläche des Produkts aufzubringen oder in das Material des Produkts in der Richtung einer Krafteinwirkung einzubringen. Dabei ist es jedoch erforderlich, eine Elektronik zum Aufwerten des Sensors ebenfalls an bzw. in dem Produkt anzuordnen und mit der Umgebung eine Kommunikation auszuführen, um die Sensordaten nach außerhalb des Produkts zur Verfügung stellen zu können. Dies kann z.B. mittels eines RFID-Chips (radio-frequency identification integrierter Schaltkreis) erfolgen. Auch kann elektrische Energie von außerhalb drahtlos in die Elektronik eingekoppelt werden, um diese samt Sensor zu betreiben.

Vergleichbar können SAW-Sensoren (surface acoustic wave) verwendet werden um akustische Oberflächenwellen zu erzeugen, welche sich als Körperschallwellen planar auf der Oberfläche des Produkts ausbreiten können. Dies kann ebenfalls mittels entsprechender Elektronik wie z.B. RFID-Chips drahtlos erfolgen. Dabei kann die Abhängigkeit der Oberflächenwellengeschwindigkeit von der mechanischen Spannung des Produkts genutzt werden, um auf die Dehnung zu schließen.

Nachteilig ist in diesen Fällen, dass derartige RF-Halbleiteranordnungen üblicherweise eine mechanisch schwache Verbindung zwischen Antenne, Sensor und integriertem Schaltkreis aufweisen, welche im Laufe der Anwendung unterbrochen werden und damit zum Ausfall des Sensors führen kann. Dies schränkt üblicherweise die Lebensdauer derartiger Sensoren deutlich ein.

Zu bedenken ist dabei auch, dass die Quartzkristalle der SAW-Sensoren üblicherweise relativ steif sind, insbesondere aufgrund der notwendigen hermetischen Einkapselung um die Quartzkristalle herum, was ferner das ganze Sensorpaket relativ groß werden und entsprechend viel Bauraum einnehmen lassen kann. Aufgrund der vergleichsweise hohen Elastizität elastomerer Material wie z.B. Gummi wird deswegen sehr wenig Kraft in den SAW-Sensor übertragen, so dass dessen Empfindlichkeit hierdurch deutlich reduziert werden kann. Dies kann ein großes Problem bei der Verwendung von SAW-Sensorik für Dehnungsmessungen darstellen.

Auch kann die Integration der Antenne in eine SAW-Sensorik zu erhöhten Herstellungskosten und bzw. oder zu einem erhöhten Bedarf an Bauraum führen, wenngleich dies ggfs. die Zuverlässigkeit erhöhen kann.

Nachteilig ist ferner, dass derartige Sensoren mit integrierten Schaltkreisen üblicherweise eine vergleichsweise aufwendige und komplexe Lösung darstellen, welche zu entsprechend vergleichbar hohen Kosten hinsichtlich der elektronischen Bauteile sowie deren Verwendung bei dem Produkt, insbesondere bei dem elastomeren Produkt, im Rahmen dessen Herstellung führen kann. Dies kann die Anwendung derartiger Lösungen aus Kostengründen unattraktiv machen.

Nachteilig ist des Weiteren, dass es zwischen dem elastomeren Material des Produkts und dem Material des Sensors mit integriertem Schaltkreis zu chemischen Reaktionen aufgrund der Materialkombination kommen kann. Da dies die Verbindung zwischen den Materialien reduzieren und bzw. oder insbesondere den Sensor mit integriertem Schaltkreis angreifen kann, kann dies die Funktionsweise und bzw. oder die Lebensdauer des Sensors und bzw. oder dessen integrierten Schaltkreises beeinträchtigen und bzw. oder reduzieren. Dies kann auch zu einem Ausfall des Sensors und bzw. oder dessen integrierten Schaltkreises führen.

Um dies zu vermeiden, kann der Sensor mit integriertem Schaltkreis zusätzlich in ein schützendes bzw. trennendes Material eingebettet werden, was jedoch einen zusätzlichen Aufwand hinsichtlich Materialaufwand und bzw. oder Herstellungsaufwand darstellen kann. Dies kann zu entsprechend erhöhten Kosten führen.

Zu beachten ist bei der Verwendung von derartigen Sensoren mit RF-Halbleiteranordnungen, dass die RF-Kommunikation durch internationale Standards reguliert sein kann. Dies kann die Verwendung einschränken und hierdurch die Leitung im Betrieb reduzieren. Zusätzlich oder alternativ kann dies die Kosten der Verwendung erhöhen, da z.B. zur elektromagnetischen Abschirmung und Filterung zusätzliche Maßnahmen erforderlich sein können.

Die WO 2010/065974 A1 beschreibt einen Sensor zum Messen einer auf ihn einwirkenden mechanischen Spannung, wobei der Sensor ein schwingendes, magnetostriktives Resonatorplättchen aufweist und die zu messende Spannung indirekt über ein veränderliches Magnetfeld auf das Resonatorplättchen wirkt. Bevorzugt wird das veränderliche Magnetfeld mittels eines Biasplättchens aus magnetostriktivem Material, oder zumindest eines Permanentmagneten als Folge der darauf vom zu vermessenden Körper wirkenden mechanischen Spannungen geschaffen.

Die WO 2019/105621 A2 beschreibt ein flexibles Produkt, vorzugsweise ein elastisches Produkt, besonders vorzugsweise ein elastomeres Produkt, mit wenigstens einer ersten Schicht, welche zumindest abschnittsweise, vorzugsweise vollständig, aus einem flexiblen, vorzugsweise aus einem elastischen, besonders vorzugsweise aus einem elastomeren, Material ausgebildet ist, wobei in und bzw. oder auf der ersten Schicht wenigstens ein Sensorelement angeordnet ist. Das flexible Produkt ist dadurch gekennzeichnet, dass das Sensorelement zumindest abschnittsweise, vorzugsweise vollständig, aus einem elektrisch leitfähigen flexiblen Material ausgebildet ist, welches wenigstens eine elektrische Eigenschaft unter Druck, Temperatur und bzw. oder Verformung verändern kann Eine Aufgabe der vorliegenden Erfindung ist es, ein System zur Dehnungserfassung eines elastomeren Produkts der eingangs beschriebenen Art bereit zu stellen, so dass die Dehnung des elastomeren Produkts einfacher, verlässlicher, kompakter, robuster und bzw. oder kostengünstiger als bisher bekannt messtechnisch erfasst und bzw. oder überwacht werden kann. Zumindest soll eine Alternative zu den bisher bekannten Möglichkeiten geschaffen werden.

Die Aufgabe wird erfindungsgemäß durch ein System mit den Merkmalen gemäß Patentanspruch 1 gelöst. Vorteilhafte Weiterbildungen sind in den Unteransprüchen beschrieben. Somit betrifft die vorliegende Erfindung ein System zur Dehnungserfassung eines elastomeren Produkts mit dem elastomeren Produkt mit einem Produktkörper, welcher insbesondere ein Riemenkörper, ein Gurtkörper, ein Reifenkörper, ein Faltenbalg oder eine Schlauchwand sein kann und zumindest im Wesentlichen ein elastomeres Material wie z.B. Gummi, d.h. ein Vulkanisat von Natur- und bzw. oder Synthesekautschuk, aufweist. Der Produktkörper weist zumindest abschnittsweise wenigstens einen magnetostriktiven Körper auf, welcher teilweise bis vollständig auf und bzw. oder in dem Produktkörper angeordnet sein kann. Der magnetostriktive Körper kann z.B. als rein metallischer Körper, d.h. als ein vollmetallischer Körper, oder auch als Elastomerkörper umgesetzt werden, wie weiter unten noch näher beschrieben werden wird.

Der magnetostriktive Körper wenigstens eine mechanische Resonanzfrequenz auf, d.h. der magnetostriktive Körper wird von mechanischen Schwingungen wenigstens einer vorbestimmten Frequenz zu einer mechanischen Schwingungsresonanz angeregt. Diese vorbestimmte Frequenz ist insbesondere von der länglichen Erstreckung des magnetostriktiven Körper in wenigstens einer Vorzugsrichtung abhängig und kann entsprechend bestimmt werden.

Das System weist ferner ein Sensorelement auf, welches zum elastomeren Produkt beabstandet und ausreichend nah zum magnetostriktiven Körper des Produktkörpers angeordnet sowie ausgebildet ist, mittels eines elektromagnetischen Erregerwechselfelds den magnetostriktiven Körper zu mechanischen Schwingungen anzuregen und mittels eines elektromagnetischen Messwechselfelds die Frequenz der mechanischen Schwingungen des magnetostriktiven Körpers zu erfassen, wobei das System ausgebildet ist, basierend wenigstens auf einer Abweichung zwischen der Resonanzfrequenz des magnetostriktiven Körpers und der erfassten Frequenz der mechanischen Schwingung des magnetostriktiven Körpers eine Dehnung des Produktkörpers zu erkennen und bzw. oder zu bestimmen.

Hierdurch kann auf einfache Art und Weise eine berührungslose Erfassung der Dehnung des elastomeren Produkts in wenigstens einer länglichen Erstreckungsrichtung erfolgen. Dies kann vorteilhafterweise ohne die Verwendung von Elektronik seitens des elastomeren Produkts erfolgen, was die Kosten und bzw. oder den Aufwand entsprechend geringhalten kann.

Hierzu kann das Sensorelement auch zweigeteilt ausgeführt sein und eine separate Sendeeinheit und eine separate Empfangseinheit aufweisen. Die Sendeeinheit kann insbesondere darauf ausgelegt sein, ein starkes und homogenes Erregersignal zu generieren, während die Empfangseinheit darauf ausgelegt sein kann, ein vergleichsweise schwaches Empfangssignal erfassen zu können.

Vorteilhaft kann auch sein, dass der magnetostriktive Körper aus einem Material hergestellt sein kann, welches gegenüber dem Material des Produktkörpers vergleichsweise wenig anfällig für chemische Reaktionen sein kann, so dass auf die üblicherweise erforderliche Einkapselung und den damit verbundenen Aufwand bzw. die damit verbundenen Kosten hinsichtlich Material und bzw. oder Montage verzichtet werden kann. Beispielsweise kann der magnetostriktive Körper ein einstückiger ferromagnetischer Metallstreifen sein. Sofern überhaupt eine Einkapselung des magnetostriktiven Körpers erforderlich ist, kann diese einfacher, leichter, kostengünstiger und bzw. oder bauraumsparender als bisher bekannt ausfallen. Im Gegensatz hierzu werden bisher, wie eingangs beschrieben, elektronische Schaltungen wie z.B. RFID-Chips verwendet, welche aufgrund ihrer Geometrie bzw. ihrer Oberflächenstruktur sowie der verschiedenen miteinander kombinierten Materialien aufwendiger einzukapseln sein können. Dies kann entsprechende Kosten verursachen.

Gemäß der Erfindung weist der magnetostriktive Körper mechanische Resonanzfrequenzen in wenigstens zwei Raumrichtungen auf. Mit anderen Worten weist der magnetostriktive Körper in wenigstens zwei Raumrichtungen und insbesondere in zwei kartesischen Raumrichtungen zwei längliche Erstreckungen auf, so dass jeweils eine mechanische Schwingung mit einer eigenen vorbestimmten Resonanzfrequenz auftreten kann. Sind die beiden Resonanzfrequenzen vorzugsweise unterschiedlich, so können die beiden Resonanzfrequenzen und damit auch die beiden Dehnungen in unterschiedlichen Raumrichtungen voneinander unterschieden und jeweils wie zuvor beschrieben sensorisch erfasst werden.

Gemäß der Erfindung ist der magnetostriktive Körper kreuzförmig ausgebildet. Hierdurch können Dehnungen in beiden Raumrichtungen sowie in dazwischenliegenden Raumrichtungen wenigstens zweidimensional sensorisch wie zuvor beschrieben erfasst werden. Dies kann insbesondere sicherstellen, dass zwei senkrecht zueinander ausgerichtete mechanische Schwingungen bzw. Dehnungen wie zuvor beschrieben erfasst werden können.

Dabei kann der magnetostriktive Körper einstückig bzw. einteilig ausgebildet sein, so dass sich zwei längliche Erstreckungen berührend kreuzen und hierdurch eine kreuzförmige Form bilden.

Gemäß einem weiteren Aspekt der Erfindung weist der magnetostriktive Körper eine kürzere Erstreckung und eine längere Erstreckung auf, welche senkrecht zueinander ausgerichtet sind. Dies kann die Umsetzung zweier unterschiedlicher mechanischer Resonanzfrequenzen wie zuvor beschrieben ermöglichen.

Gemäß einem weiteren Aspekt der Erfindung weist der magnetostriktive Körper wenigstens eine Durchgangsöffnung auf, welche vom elastomeren Material des Produktkörpers zumindest teilweise, vorzugsweise vollständig, durchdrungen wird. Dies kann eine formschlüssige Verbindung zwischen dem magnetostriktiven Körper und dem elastomeren Material des elastomeren Produkts ermöglichen, um den Halt zwischen dem magnetostriktiven Körper und dem elastomeren Material des elastomeren Produkts zu verbessern. Dies kann die Übertragung von Dehnungen bzw. von mechanischen Spannungen und damit das Ergebnis der sensorischen Erfassung verbessern.

Gemäß einem weiteren Aspekt der Erfindung ist die Durchgangsöffnung eine längliche Durchgangöffnung oder eine punktförmige Durchgangsöffnung. Diese Ausgestaltungen können die Gestaltungsmöglichkeiten der Durchgangsöffnungen erhöhen.

Gemäß einem weiteren Aspekt der Erfindung weist die kürzere Erstreckung des magnetostriktiven Körpers wenigstens eine längliche Durchgangöffnung und bzw. oder die längere Erstreckung des magnetostriktiven Körpers wenigstens eine punktförmige Durchgangsöffnung auf, oder umgekehrt. Diese Ausgestaltungen können die Gestaltungsmöglichkeiten der Durchgangsöffnungen erhöhen.

Gemäß einem weiteren Aspekt der Erfindung weist der magnetostriktive Körper mechanische Resonanzfrequenzen in allen drei Raumrichtungen auf. Dies können insbesondere die kartesischen Raumrichtungen sein. Diese Ausgestaltungen können die Möglichkeiten der Dehnungserfassung weiter erhöhen.

Gemäß einem weiteren Aspekt der Erfindung ist der magnetostriktive Körper spiralförmig ausgebildet. Dies kann die Durchdringung des magnetostriktiven Körpers mit dem elastomeren Material des elastomeren Produkts verbessern. Eine Dehnungserfassung kann vorzugsweise in der Richtung der länglichen Erstreckung des magnetostriktiven Körpers erfolgen.

Gemäß einem weiteren Aspekt der Erfindung ist der magnetostriktive Körper ein ferromagnetischer Körper. Dies kann die Umsetzung vereinfachen.

Gemäß einem weiteren Aspekt der Erfindung ist der magnetostriktive Körper ein magnetostriktiver Elastomerkörper. Hierzu können beispielsweise metallische Materialien in das elastomere Material des Elastomerkörpers in einem ausreichend hohen Maße eingemischt werden, um die zuvor beschriebenen Aspekte der Erfindung umsetzen zu können. Gleichzeitig kann der magnetostriktive Elastomerkörper eine vergleichbare Elastizität wie das elastomere Material des Produktkörpers aufweisen, um dessen Eigenschaften und insbesondere dessen Elastizität möglichst wenig bis gar nicht zu verändern.

Vorzugsweise weist der magnetostriktive Elastomerkörper in ein Elastomermaterial eingebettete ferromagnetische Partikel, vorzugsweise Mikropartikel, auf. Derartige Partikel können z.B. Eisen, Nickel und dergleichen enthalten bzw. hieraus bestehen. Dies kann die Umsetzung der ferromagnetischen Eigenschaften des magnetostriktiven Körpers ermöglichen. Die Verwendung von Partikeln und insbesondere die Verwendung von Mikropartikeln kann eine besonders gleichmäßige Verteilung der ferromagnetischen Elemente im magnetostriktiven Elastomerkörper bewirken, so dass auch der magnetostriktive bzw. der inverse magnetostriktive Effekt entsprechend gleichmäßig auftreten kann. Dies kann die sensorische Erfassung begünstigen.

Gemäß einem weiteren Aspekt der Erfindung ist der magnetostriktive Körper ein vollmetallischer Körper. Dies kann ebenfalls die Umsetzung der zuvor beschriebenen Eigenschaften ermöglichen. Dies kann ggfs. eine einfacher, schneller und bzw. kostengünstiger herzustellende Variante darstellen.

Gemäß einem weiteren Aspekt der Erfindung ist das Sensorelement als stationäre Einrichtung oder als mobile Einrichtung ausgeführt. Als stationäre Einrichtung kann eine dauerhafte und insbesondere selbsttätige Umsetzung der Aspekte der Erfindung an dem elastomeren Produkt erfolgen. Als mobile Einrichtung kann dies bei Bedarf, insbesondere seitens einer Person, erfolgen, was die Kosten der Umsetzung der Erfindung reduzieren kann, da eine mobile Einrichtung flexibel bei mehreren elastomeren Produkten eingesetzt werden kann.

Die vorliegende Erfindung betrifft auch ein elastomeres Produkt zur Verwendung in einem System wie zuvor beschrieben. Hierdurch kann ein elastomeres Produkt zur Verfügung gestellt werden, um ein erfindungsgemäßes System umzusetzen und dessen Eigenschaften und Vorteile nutzen zu können.

Temperaturkorrekturen können durch Hinzufügen einer Sensorrichtung in stressneutraler Ausrichtung oder durch nicht berührende Temperatursensoren wie z.B. Infrarotrot oder herkömmliches PT100 an der Sondengehäusewand vorgenommen werden.

Mehrere Ausführungsbeispiele und weitere Vorteile der Erfindung werden nachstehend im Zusammenhang mit den folgenden Figuren erläutert. Darin zeigt:
- Fig. 1: eine schematische perspektivische Darstellung eines erfindungsgemäßen Systems gemäß eines ersten Ausführungsbeispiels;
- Fig. 2: eine schematische perspektivische Darstellung eines erfindungsgemäßen Systems gemäß eines zweiten Ausführungsbeispiels;
- Fig. 3: ein Längsschnitt durch das elastomere Produkt der Fig. 2; und
- Fig. 4: eine schematische perspektivische Darstellung eines Systems gemäß eines Beispiels, außerhalb der Schutzbereiches der Ansprüche.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

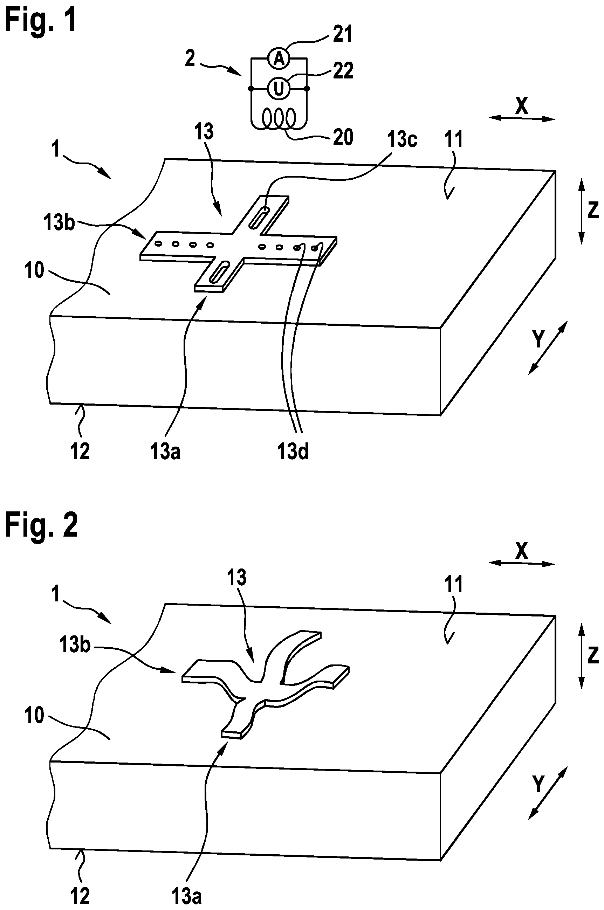

Fig. 1 zeigt eine schematische perspektivische Darstellung eines erfindungsgemäßen Systems gemäß eines ersten Ausführungsbeispiels.

Das erfindungsgemäße System gemäß dem ersten Ausführungsbeispiel der Fig. 1 weist ein elastomeres Produkt 1 auf, welches in diesem Fall z.B. ein endlos geschlossener Fördergurt 1 sein kann. Das elastomere Produkt 1 besteht im Wesentlichen aus einem Produktkörper 10 als Gurtkörper 10 aus einem elastomeren Material. Entlang der länglichen endlos geschlossenen Erstreckungsrichtung des Riemenkörpers 10 sind mehrere parallel zueinander in derselben Ebene verlaufende Festigkeitsträger (nicht dargestellt) z.B. in Form von Stahlseilen in dem elastomeren Material eingebettet. Der Produktkörper 10 weist als Gurtkörper 10 eine Oberseite 11 in Form einer Förderseite 11 und gegenüberliegend eine Unterseite12 als Laufseite 12 auf. Dies ist bisher z.B. bei Fördergurten 1 bekannt.

Erfindungsgemäß weist der Produktkörper 10 einen magnetostriktiven und insbesondere einen ferromagnetischen Elastomerkörper 13 auf, dessen elastomeres Material mit magnetostriktiven bzw. ferromagnetischen Elemente, z.B. mit metallischen Partikeln und insbesondere mit metallischen Mikropartikeln, versetzt ist. Alternativ könnte auch ein magnetostriktiver und insbesondere ein ferromagnetischer vollmetallischer Körper 13 verwendet werden.

Erfindungsgemäß ist ferner ein Sensorelement 2 zum elastomeren Produkt 1 beabstandet und ausreichend nah zum magnetostriktiven Körper 13 des Produktkörpers 10 angeordnet, um den magnetostriktiven Körper 13 mittels eines induktiven elektromagnetischen Wechselfelds zu mechanischen Schwingungen anzuregen. Dies kann seitens des Sensorelements 2 mittels einer Induktionsspule 20 und mittels einer Stromquelle 21 erfolgen. Ferner kann die mechanische Schwingung des magnetostriktiven Körpers 13 mittels eines Spannungsmessers 22 erfasst werden.

Auch die Induktionsspule 20 in Resonanz betrieben werden, z.B. durch die Anordnung eines Kondensators in Reihe oder parallel. Ferner könnte eine Antenne verwendet werden, auch wenn nur das Magnetfeld für die Erregung des magnetostriktiven Elastomerkörper 13 nützlich ist. In diesem Fall könnten zwei oder mehrere Resonanzfrequenzen erfasst werden. Hierzu könnte eine entsprechende Menge von LC-Resonatoren im Schaltkreis verwendet werden. Ggfs. könnte ein Sweep-Signal und dergleichen zur Signalerzeugung ohne LC-Resonatoren verwendet werden.

Somit ist es erfindungsgemäß möglich, mittels des Sensorelements 2 ein elektromagnetisches Erregerwechselfeld zu erzeugen und hiermit den magnetostriktiven Körper 13 zu mechanischen Schwingungen anzuregen. Die hieraus resultierende Frequenz der mechanischen Schwingungen des magnetostriktiven Körpers 13 kann mittels eines elektromagnetischen Messwechselfelds des Sensorelements 2 erfasst werden. Aus einer Abweichung zwischen der Resonanzfrequenz des magnetostriktiven Körpers 13 und der erfassten Frequenz der mechanischen Schwingung des magnetostriktiven Körpers 13 kann dann eine Dehnung des Produktkörpers 10 bestimmt werden.

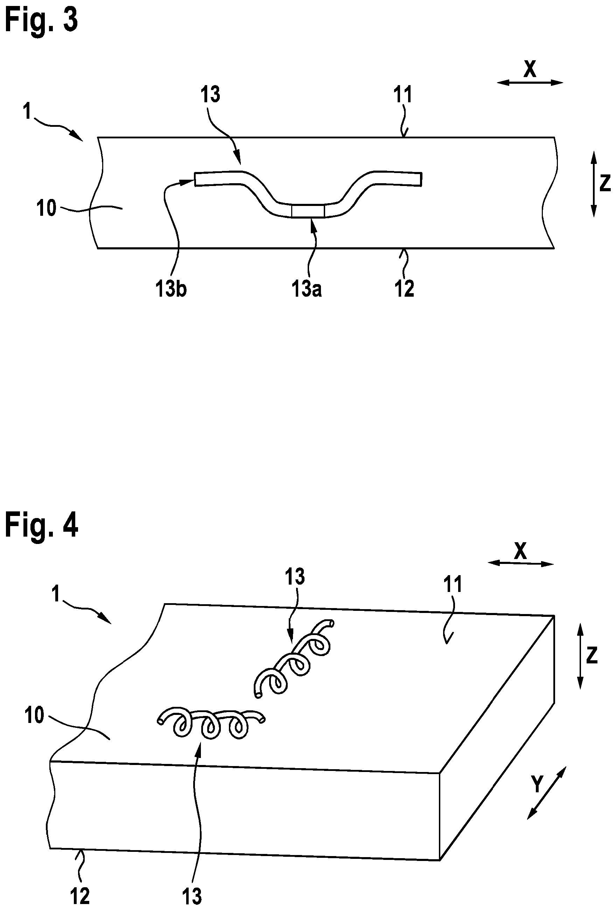

Um Dehnungen nicht lediglich in einer kartesischen Raumrichtung X, Y, Z sondern in zwei oder in allen drei kartesischen Raumrichtungen X, Y, Z wie zuvor beschrieben sensorisch erfassen zu können, kann der magnetostriktive Körper 13 kreuzförmig mit einer kürzeren Erstreckung 13a in der Querrichtung Y und mit einer längeren Erstreckung 13b in der Längsrichtung X ausgebildet sein, siehe z.B. Fig. 1. Durch die unterschiedlichen Längen in der Querrichtung Y und in der Längsrichtung X können die beiden Resonanzfrequenzen und hierdurch auch die jeweiligen Dehnungen voneinander unterschieden werden. Dies kann auch dreidimensional umgesetzt werden, siehe Fig. 2 und 3. Dies kann ferner durch einen spiralförmigen magnetostriktiven Körper 13 umgesetzt werden, siehe Figur 4 (außerhalb des Schutzbereiches der Ansprüche).

Um dabei die mechanische Kopplung zwischen dem elastomeren Material des elastomeren Produkts 1 bzw. dessen Produktkörper 10 und dem magnetostriktiven Körper 13 zu verbessern, kann der magnetostriktive Körper 13 in der kürzeren Erstreckung 13a längliche Durchgangöffnungen 13c und in der längeren Erstreckung 13b punktförmige Durchgangsöffnungen 13d aufweisen, welche vom elastomeren Material des Produktkörpers 10 durchdrungen sein können.

Ein derartiges System kann sowohl stationär für ein zumindest im Wesentlichen fest positioniertes elastomeres Produkt 1 wie z.B. für eine Luftfeder 1 oder für einen Schlauch 1 eingesetzt werden, jedoch auch für ein sich bewegendes und insbesondere endlos umlaufendes elastomeres Produkt 1 wie z.B. den in der Fig. 1 betrachteten Fördergurt 1 aber auch für einen Aufzugsriemen 1, für einen Antriebsriemen 1 oder für einen Fahrzeugreifen 1.

### Bezugszeichenliste

### (Teil der Beschreibung)

- X: Längsrichtung; Tiefe
- Y: Querrichtung; Breite
- Z: vertikale Richtung; Höhe

- 1: elastomeres Produkt; Antriebsriemen; Aufzugsriemen; Fördergurt; Fahrzeugreifen; Luftfeder; Schlauch; Hülse
- 10: Produktkörper; Riemenkörper; Gurtkörper; Reifenkörper; Faltenbalg; Schlauchwand
- 11: Oberseite; Förderseite; obere Deckplatte
- 12: Unterseite; Laufseite; untere Deckplatte
- 13: magnetostriktiver/ferromagnetischer (Elastomer-/vollmetallischer) Körper
- 13a: kürzere Erstreckung
- 13b: längere Erstreckung
- 13c: längliche Durchgangsöffnung
- 13d: punktförmige Durchgangsöffnung

- 2: Sensorelement
- 20: Induktionsspule
- 21: Stromquelle
- 22: Spannungsmesser

## Patentansprüche

1. System zur Dehnungserfassung eines elastomeren Produkts (1) mit dem elastomeren Produkt (1)
mit einem Produktkörper (10), welcher zumindest im Wesentlichen ein elastomeres Material aufweist,
wobei der Produktkörper (10) zumindest abschnittsweise wenigstens einen magnetostriktiven Körper (13) aufweist,
wobei der magnetostriktive Körper (13) wenigstens eine mechanische Resonanzfrequenz aufweist, und
mit wenigstens einem Sensorelement (2), welches zum elastomeren Produkt (1) beabstandet und ausreichend nah zum magnetostriktiven Körper (13) des Produktkörpers (10) angeordnet sowie ausgebildet ist,
mittels eines elektromagnetischen Erregerwechselfelds den magnetostriktiven Körper (13) zu mechanischen Schwingungen anzuregen und
mittels eines elektromagnetischen Messwechselfelds die Frequenz der mechanischen Schwingungen des magnetostriktiven Körpers (13) zu erfassen,
wobei das System ausgebildet ist, basierend wenigstens auf einer Abweichung zwischen der Resonanzfrequenz des magnetostriktiven Körpers (13) und der erfassten Frequenz der mechanischen Schwingung des magnetostriktiven Körpers (13) eine Dehnung des Produktkörpers (10) zu erkennen und/oder zu bestimmen,
wobei
magnetostriktive Körper (13) mechanische Resonanzfrequenzen in wenigstens zwei Raumrichtungen (X, Y, Z) aufweist,
**dadurch gekennzeichnet, dass**
der magnetostriktive Körper (13) kreuzförmig ausgebildet ist.

2. System nach Anspruch 1,
**dadurch gekennzeichnet, dass**
der magnetostriktive Körper (13) eine kürzere Erstreckung (13a) und eine längere Erstreckung (13b) aufweist, welche senkrecht zueinander ausgerichtet sind.

3. System nach einem der vorangehenden Ansprüche, **dadurch gekennzeichnet, dass** der magnetostriktive Körper (13) wenigstens eine Durchgangsöffnung (13c, 13d) aufweist, welche vom elastomeren Material des Produktkörpers (10) zumindest teilweise, vorzugsweise vollständig, durchdrungen wird.

4. System nach Anspruch 3,
**dadurch gekennzeichnet, dass**
die Durchgangsöffnung (13c, 13d) eine längliche Durchgangöffnung (13c) oder eine punktförmige Durchgangsöffnung (13d) ist.

5. System nach Anspruch 2 und 4,
**dadurch gekennzeichnet, dass**
die kürzere Erstreckung (13a) des magnetostriktiven Körpers (13) wenigstens eine längliche Durchgangöffnung (13c) und/oder die längere Erstreckung (13b) des magnetostriktiven Körpers (13) wenigstens eine punktförmige Durchgangsöffnung (13d) aufweist, oder umgekehrt.

6. System nach einem der vorangehenden Ansprüche, **dadurch gekennzeichnet, dass** der magnetostriktive Körper (13) mechanische Resonanzfrequenzen in allen drei Raumrichtungen (X, Y, Z) aufweist.

7. System nach einem der vorangehenden Ansprüche, **dadurch gekennzeichnet, dass** der magnetostriktive Körper (13) spiralförmig ausgebildet ist.

8. System nach einem der vorangehenden Ansprüche, **dadurch gekennzeichnet, dass** der magnetostriktive Körper (13) ein ferromagnetischer Körper (13) ist.

9. System nach einem der vorangehenden Ansprüche, **dadurch gekennzeichnet, dass** der magnetostriktive Körper (13) ein magnetostriktiver Elastomerkörper (13) ist, wobei der magnetostriktiver Elastomerkörper (13) vorzugsweise in ein Elastomermaterial eingebettete ferromagnetische Partikel, vorzugsweise Mikropartikel, aufweist.

10. System nach einem der Ansprüche 1 bis 8,
**dadurch gekennzeichnet, dass**
der magnetostriktive Körper (13) ein vollmetallischer Körper (13) ist.

11. System nach einem der vorangehenden Ansprüche, **dadurch gekennzeichnet, dass** das Sensorelement (2) als stationäre Einrichtung oder als mobile Einrichtung ausgeführt ist.

## Claims

1. System for detecting elongation of an elastomeric product (1),
comprising the elastomeric product (1)
comprising a product body (10) which comprises, at least substantially, an elastomeric material, wherein the product body (10) comprises, at least in portions, at least one magnetostrictive body (13),
wherein the magnetostrictive body (13) has at least one mechanical resonance frequency, and comprising at least one sensor element (2), which is arranged at a distance from the elastomeric product (1) and sufficiently close to the magnetostrictive body (13) of the product body (10), and is configured
to excite the magnetostrictive body (13) to mechanical oscillations by means of an electromagnetic alternating excitation field and
to detect the frequency of the mechanical oscillations of the magnetostrictive body (13) by means of an electromagnetic alternating measurement field,
wherein the system is configured to recognize and/or determine an elongation of the product body (10) based at least on a deviation between the resonance frequency of the magnetostrictive body (13) and the detected frequency of the mechanical oscillation of the magnetostrictive body (13), wherein the magnetostrictive body (13) has mechanical resonance frequencies in at least two spatial directions (X, Y, Z), **characterized in that** the magnetostrictive body (13) is cross-shaped.

2. System according to claim 1, **characterized in that**
the magnetostrictive body (13) has a shorter extent (13a) and a longer extent (13b), which are oriented perpendicular to one another.

3. System according to one of the preceding claims, **characterized in that**
the magnetostrictive body (13) has at least one through-opening (13c, 13d), which is at least partially, preferably completely, penetrated by the elastomeric material of the product body (10).

4. System according to claim 3, **characterized in that**
the through-opening (13c, 13d) is an elongate through-opening (13c) or a point-shaped through-opening (13d).

5. System according to claims 2 and 4, **characterized in that**
the shorter extent (13a) of the magnetostrictive body (13) has at least one elongate through-opening (13c) and/or the longer extent (13b) of the magnetostrictive body (13) has at least one point-shaped through-opening (13d), or vice versa.

6. System according to one of the preceding claims, **characterized in that**
the magnetostrictive body (13) has mechanical resonance frequencies in all three spatial directions (X, Y, Z).

7. System according to one of the preceding claims, **characterized in that**
the magnetostrictive body (13) is spiral-shaped.

8. System according to one of the preceding claims, **characterized in that**
the magnetostrictive body (13) is a ferromagnetic body (13).

9. System according to one of the preceding claims, **characterized in that**
the magnetostrictive body (13) is a magnetostrictive elastomer body (13),
wherein the magnetostrictive elastomer body (13) preferably comprises ferromagnetic particles, preferably microparticles, embedded in an elastomeric material.

10. System according to one of claims 1 to 8, **characterized in that**
the magnetostrictive body (13) is an all-metal body (13).

11. System according to one of the preceding claims, **characterized in that**
the sensor element (2) is designed as a stationary device or as a mobile device.

## Revendications

1. Système de détection d'allongement d'un produit élastomère (1),
comprenant le produit élastomère (1)
comprenant un corps de produit (10), lequel comporte, au moins substantiellement, un matériau élastomère,
dans lequel le corps de produit (10) comporte, au moins par portions, au moins un corps magnétostrictif (13),
dans lequel le corps magnétostrictif (13) présente au moins une fréquence de résonance mécanique, et
comprenant au moins un élément capteur (2), lequel est agencé à distance du produit élastomère (1) et suffisamment près du corps magnétostrictif (13) du corps de produit (10), et est configuré pour exciter le corps magnétostrictif (13) en oscillations mécaniques au moyen d'un champ alternatif électromagnétique d'excitation et
pour détecter la fréquence des oscillations mécaniques du corps magnétostrictif (13) au moyen d'un champ alternatif électromagnétique de mesure,
dans lequel le système est configuré pour reconnaître et/ou déterminer un allongement du corps de produit (10) sur la base au moins d'un écart entre la fréquence de résonance du corps magnétostrictif (13) et la fréquence détectée de l'oscillation mécanique du corps magnétostrictif (13), dans lequel le corps magnétostrictif (13) présente des fréquences de résonance mécaniques dans au moins deux directions spatiales (X, Y, Z), **caractérisé en ce que** le corps magnétostrictif (13) est de forme cruciforme.

2. Système selon la revendication 1, **caractérisé en ce que**
le corps magnétostrictif (13) présente une extension plus courte (13a) et une extension plus longue (13b), lesquelles sont orientées perpendiculairement l'une à l'autre.

3. Système selon l'une des revendications précédentes, **caractérisé en ce que**
le corps magnétostrictif (13) présente au moins une ouverture traversante (13c, 13d), laquelle est traversée au moins partiellement, de préférence complètement, par le matériau élastomère du corps de produit (10).

4. Système selon la revendication 3, **caractérisé en ce que**
l'ouverture traversante (13c, 13d) est une ouverture traversante oblongue (13c) ou une ouverture traversante ponctuelle (13d).

5. Système selon les revendications 2 et 4, **caractérisé en ce que**
l'extension plus courte (13a) du corps magnétostrictif (13) présente au moins une ouverture traversante oblongue (13c) et/ou l'extension plus longue (13b) du corps magnétostrictif (13) présente au moins une ouverture traversante ponctuelle (13d), ou inversement.

6. Système selon l'une des revendications précédentes, **caractérisé en ce que**
le corps magnétostrictif (13) présente des fréquences de résonance mécaniques dans les trois directions spatiales (X, Y, Z).

7. Système selon l'une des revendications précédentes, **caractérisé en ce que**
le corps magnétostrictif (13) est de forme spiralée.

8. Système selon l'une des revendications précédentes, **caractérisé en ce que**
le corps magnétostrictif (13) est un corps ferromagnétique (13).

9. Système selon l'une des revendications précédentes, **caractérisé en ce que**
le corps magnétostrictif (13) est un corps élastomère magnétostrictif (13),
dans lequel le corps élastomère magnétostrictif (13) comporte de préférence des particules ferromagnétiques, de préférence des microparticules, incorporées dans un matériau élastomère.

10. Système selon l'une des revendications 1 à 8, **caractérisé en ce que**
le corps magnétostrictif (13) est un corps entièrement métallique (13).

11. Système selon l'une des revendications précédentes, **caractérisé en ce que**
l'élément capteur (2) est réalisé sous forme de dispositif stationnaire ou de dispositif mobile.
